(19) Europäisches Patentamt
European Patent Office
Office européen des brevets

(11) **EP 4 756 497 A1**

(12) **EUROPEAN PATENT APPLICATION**

(43) Date of publication:
**10.06.2026 Bulletin 2026/24**

(21) Application number: **25214602.2**

(22) Date of filing: **10.11.2025**

(51) International Patent Classification (IPC):
*G01S 19/24* (2010.01)      *G01S 19/37* (2010.01)

(52) Cooperative Patent Classification (CPC):
**G01S 19/246; G01S 19/37**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **05.12.2024 US 202463728221 P
09.10.2025 US 202519354111**

(71) Applicant: **Samsung Electronics Co., Ltd.
Suwon-si, Gyeonggi-do 16677 (KR)**

(72) Inventors:
• WU, Jie
  **San Jose, CA, 95134 (US)**
• SONG, Kee-Bong
  **San Jose, CA, 95134 (US)**
• RAMAN, Sundar
  **San Jose, CA, 95134 (US)**

(74) Representative: **Kuhnen & Wacker
Patent- und Rechtsanwaltsbüro PartG mbB
Prinz-Ludwig-Straße 40 A
85354 Freising (DE)**

(54) **GNSS PILOT/DATA COMBINING WITH REAL-TIME MODULATION**

(57)    A method and receiver architecture are disclosed for coherently combining pilot and data signals in a global navigation satellite system, GNSS, receiver to improve sensitivity and tracking performance. A pilot signal and corresponding data signal from a common GNSS source are received (402), and the data bits in the data signal are demodulated (404) using the pilot as a phase reference. The demodulated bits are cancelled (406) or re-modulated for alignment, enabling (408) coherent combination of the pilot and data signals into a single combined signal. The system may remove constant phase offsets via a phase rotator, perform secondary code cancelling, and dynamically adjust combining gain based on estimated bit error rate. Engagement control enables or disables combining based on carrier-to-noise density ratio and signal power thresholds.

FIG. 4

**Description**

**TECHNICAL FIELD**

The disclosure generally relates to receivers for global navigation satellite systems (GNSS). More particularly, the subject matter disclosed herein relates to signal processing for GNSS receivers that improves tracking and acquisition performance by coherently combining pilot and data signals in real-time without external assistance.

**SUMMARY**

Improving a signal to noise ratio (SNR) is important to fully utilize benefits from L5 signals in GNSS products. In some L5 tracking, only pilot or data signal is processed.

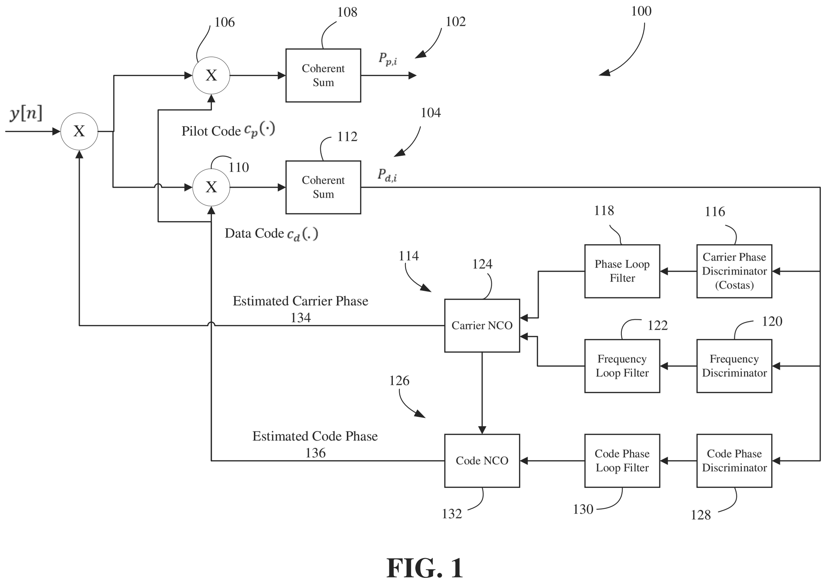

FIG. 1 illustrates baseline architecture of a global navigation satellite system (GNSS) receiver.

Referring to FIG. 1, a baseline architecture of a GNSS receiver 100 is illustrated, which shows a signal tracking loop used in GNSS receivers, such as global positioning system (GPS), which estimates the carrier phase, frequency, and code phase of a satellite signal using pilot and data channels. An input signal y[n] is received at the receiver 100. The received GNSS signal y[n] (e.g., digitized I/Q samples after down conversion) is split into two branches: a pilot channel 102 and a data channel 104. The pilot channel 102 multiplies 106 y[n] with a locally generated pilot code $C_p(.)$. After multiplication, the signal is coherently integrated 108 (summed over a fixed time) to produce $P_{p,i}$, the pilot correlator output (no navigation data). The data channel 104 multiplies 110 y[n] with a data code $C_d(.)$ and is coherently integrated 112 to generate $P_{d,i}$, the data correlator output (includes navigation data bits). The signal $P_{d,i}$ is then provided to the carrier tracking loop 114 to track the frequency and phase of the signal's carrier employing a carrier phase discriminator (phase locked loop or Costas Loop) 116 that uses outputs from the pilot or data channel to estimate carrier phase error, a phase loop filter 118 that filters the output of the discriminator to smooth the phase estimate, a frequency discriminator 120 that measures Doppler shift (i.e., frequency error) and a frequency loop filter 122 that filters the frequency error signal. It is to be appreciated that in a GNSS receiver 100, a tracking loop is a feedback system that keeps the receiver's locally generated signal aligned with a satellite's signal after acquisition. It continuously estimates and corrects errors in code phase, carrier frequency, and carrier phase caused by Doppler shifts, oscillator drift, and noise. The information is used by the carrier numerically controlled oscillator (NCO) 124 to generate a locally reconstructed carrier wave to match the incoming signal's phase and frequency. Additionally, a code tracking loop 126 estimates the code phase (timing) of the signal using a code phase discriminator 128, a code phase loop filter 130 and a code NCO 132 that produces a locally reconstructed code sequence, synchronized with the incoming signal. The estimated carrier phase output 134 and estimated code phase output 136 are used by the receiver to remain locked onto the satellite signal to decode navigation data and compute position.

However, since the power of the input signal is often split between data and pilot, the receiver has only half the signal energy when using only the data signal which results in reduced performance in low SNR environments, e.g., the data-only signal may be too weak or unstable to maintain lock. To recover the lost signal power, it has been proposed to combine the pilot and data signal, however, without knowing the data bits in the data signal, the signals cannot be combined.

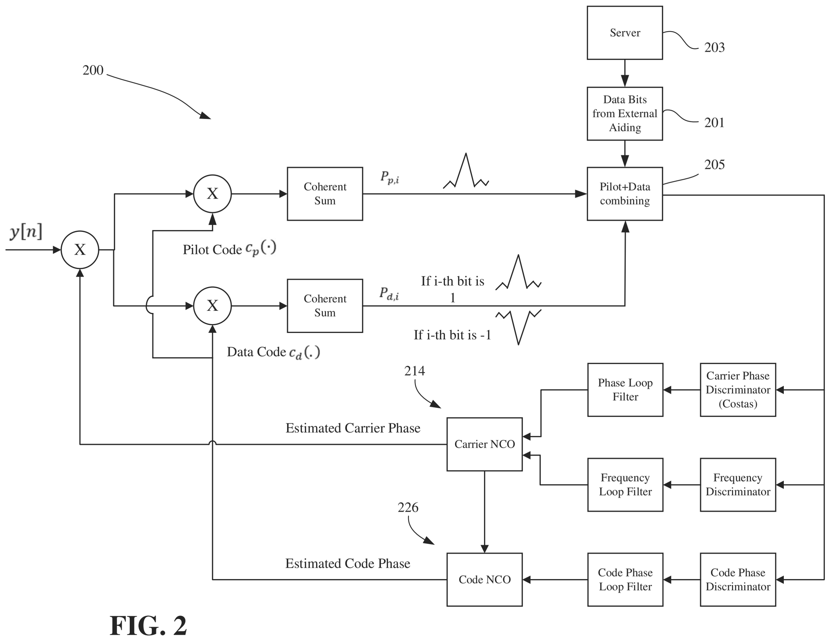

How to effectively combine the pilot and data signal in the tracking loops has recently received large interest from the industry. For example, a service has been proposed to stream Nav data bits over cellular or Wifi to GNSS receivers, to allow for a 3dB coherent combining gain. An example of such a proposed architecture 200 is illustrated in FIG. 2.

FIG. 2 illustrates GNSS architecture employing an external data streaming service.

Referring to FIG. 2, the proposed technology requires the Nav bits 201 to be sent to a GNSS receiver via a communication link (such as cellular or Wifi) from a server 203. The GNSS receiver does not demodulate the Nav bits but employs the received data bits from server 203 to coherently combine the pilot and data signal. One combined, the output of the combining 205 is transmitted to the carrier tracking loop 214 and code tracking loop 226 and functions similar to that described in relation to FIG. 1.

One issue with the above approach is that it requires an external Nav data streaming service and a communication link.

To overcome these types of issues, systems and methods are described herein for coherently combining pilot and data signals in real time without external assistance, i.e., which does not rely on the service of external Nav bits aiding. The present disclosure provides for the following: demodulating data bits of a data signal (using a pilot signal as a reference) in real time, before sending the pilot/data signal to tracking loops; using the demodulated data bit to coherently combine pilot and data signal, and then sending the combined signal to tracking loops; and run the existing frequency, carrier phase, code loops without any change.

The above approaches of the present disclosure improve on previous methods because they are simpler to implement (i.e., no external aiding) and are more power efficient. For tracking, substantial gain (~1.5 to 3dB) may be achieved when comparing to an existing baseline (no combining) algorithm, for full range of carrier-to-noise density ratio ($C/N_0$) levels (>=12dBHz). More specifically, 3dB gain may be achieved for wide range of $C/N_0$ levels (>=21dBHz), which is the theoretical limit for coherent combining of two signals. For acquisition, a sensitivity gain may be 1.5dB, because a higher detection threshold may be used to maintain the same probability of false alarms.

In an embodiment, a method for coherently combining pilot and data signals in a GNSS receiver includes receiving a pilot signal and a data signal from a same GNSS signal source; demodulating data bits in the data signal using the pilot signal as a phase reference in real time; wiping off the demodulated data bits from the data signal; and coherently combining the pilot signal and the data signal to generate a combined signal for use in one or more tracking loops.

In an embodiment, a GNSS receiver comprises at least one processing unit; and a memory storing instructions that, when executed by the processing unit, cause the GNSS receiver to: receive a pilot signal and a data signal from a same GNSS signal source; demodulate data bits in the data signal using the pilot signal as a phase reference in real time; cancelling or wiping off the demodulated data bits from the data signal; and coherently combine the pilot signal and the data signal to generate a combined signal for use in one or more tracking loops.

## BRIEF DESCRIPTION OF THE DRAWING

In the following section, the aspects of the subject matter disclosed herein will be described with reference to exemplary embodiments illustrated in the figures, in which:

FIG. 1 illustrates baseline architecture of a GNSS receiver.

FIG. 2 illustrates GNSS architecture employing an external data streaming service.

FIG. 3 is an architecture of a GNSS receiver, according to an embodiment of the present disclosure.

FIG. 4 is a flowchart illustrating a method for coherently combining a pilot signal and a data signal, according to an embodiment of the present disclosure.

FIG. 5 is an architecture of a GNSS receiver, according to another embodiment of the present disclosure.

FIG. 6 is a flowchart illustrating a method for coherently combining a pilot signal and a data signal, according to another embodiment of the present disclosure.

FIG.7 is a block diagram of an electronic device in a network environment, according to an embodiment.

FIG. 8 shows a system including a user equipment (UE) and a gNB in communication with each other.

## DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

The present disclosure provides a GNSS signal processing algorithm that improves tracking and acquisition performance by coherently combining pilot and data signals in real time without external assistance. GNSS receivers typically use only the pilot signal for tracking because the data signal contains navigation bits that flip every bit period, preventing coherent combination. This limits the SNR gain to what the pilot alone provides.

The present disclosure provides a real-time pilot-aided demodulation approach that allows the data signal to be used in tracking including demodulating data bits from the data signal using the pilot signal as a phase reference, wiping off the demodulated data bits from the data signal (or equivalently modulate them onto the pilot), coherently combining the pilot and data signals (i.e., aligning the pilot and data signals in phase so that they reinforce each other constructively) , doubling the usable signal power and improving SNR and feeding the combined signal into the receiver's existing tracking loops without modifying loop design. The algorithm further includes real-time engagement decision logic based on average carrier-to-noise density ratio ($C/N_0$) and signal power to ensure combining is only performed when it may be beneficial.

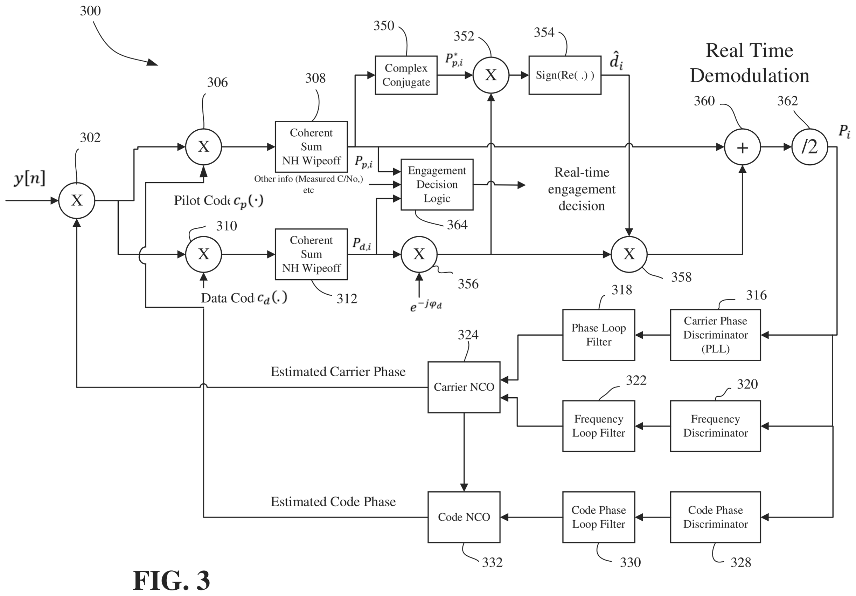

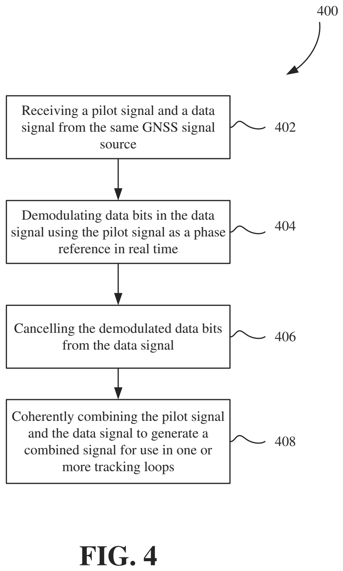

FIG. 3 illustrates an example signal processing architecture 300 for a GNSS receiver that enables real-time demodulation using both pilot and data components of the received signal. FIG. 4 is a flowchart illustrating the method 400 for real-time demodulation and coherently combining a pilot signal and a data signal of architecture 300 for improved tracking. It is to be appreciated that in the wireless communications, a pilot signal is a transmitted signal component which does not contain the data bit information. Without the need to demodulate or decode data bits, the pilot signal is to aid the receiver in performing synchronization, frequency/phase estimations, channel estimation, etc.

In step 402, an incoming signal $y[n]$ including a pilot signal and data signal from the same GNSS source is received. The incoming sampled signal $y[n]$ is received at a first multiplier 302 and is subsequently processed through two parallel branches: one for the pilot signal and one for the data signal. In the pilot branch, the signal is mixed in a second multiplier 306 with a locally generated pilot code $c_p(\cdot)$, while in the data branch, the signal is similarly mixed in multiplier 310 with a locally generated data code $c_d(\cdot)$.

In step 404, the data bits of the data signal are demodulated using the pilot signal as a phase reference in real time. Here, real-time means that the incoming data is processed in the receiver at the same rate as the data rate. For example, the GNSS L5 signal data symbol rate is 100Hz (i.e., 10ms per data symbol). Real-time processing means that the receiver needs to finish processing each data symbol within 10ms, without requiring storing of multiple symbols for later processing. However, the method of the present disclosure may be applied to both real-time and non-real-time processing.

Non-real-time means the receiver stores several symbols and then processes them in a batch. For example, GPS L5 signal data period = 10ms per symbol. The receiver stores 20 symbols (both data and pilot) into memory, which is 200ms worth of data and pilot symbols. Then, the receiver processes the symbols at the end of this 200ms period. The outputs of these multipliers 306, 310 are passed to coherent summation and non-coherent wipeoff modules 308 and 312, respectively, which produce complex correlation outputs $P_{p,i}$ and $P_{d,i}$. Modules 308, 312 perform an integration and dump process, where 20msec of consecutive samples are summed before output. These outputs are used to support both tracking and data demodulation. For real-time demodulation, the pilot output $P_{p,i}$ is passed through a complex conjugate operation in module 350 to produce $P^*_{p,i}$, which is then multiplied with the data output $P_{d,i}$ in multiplier 352. The real part of the resulting product is used in module 354 to generate an estimate of the transmitted navigation data bit $\hat{d}_i$ via a sign function.

In parallel, the data output $P_{d,i}$ is also multiplied by a phasor $e^{-j\phi d}$ in multiplier 356 to remove residual phase (i.e., remove constant phase offset by a phase rotator), and then multiplied again in multiplier 358 with the estimated bit $\hat{d}_i$, producing a corrected data component, i.e., wiping of demodulated data bits from the data signal, step 406. It is to be appreciated that the wiping off is to cancel the data modulation in the data signal $P_{d,i}$, enabling coherent combination of the pilot signal $P_{p,i}$ and the data signal $P_{d,i}$. In step 408, both the pilot and corrected data signals are summed in adder 360 and averaged in divider 362 to produce a combined signal $P_i$, i.e., the pilot signal and data signal are coherently combined to generate the combined signal $P_i$ for use in one of more tracking loops.

Engagement decision logic module 364 monitors signal conditions, such as measured carrier-to-noise density ratio $C/N_0$, and may determine in real time whether to select the pilot, data, or combined signal path as the input. Module 364 uses measured average $C/N_0$ and real-time signal power (based on pilot and data coherent sums) to generate a real-time engagement decision to control whether the real-time data demodulation and pilot/data combining should run or not based on the following conditions:

(1)

$$\text{average } C/N_0 > \text{Threshold1};$$

and
(2)

$$\left|P_{p,i}\right|^2 + \left|P_{d,i}\right|^2 > \text{Threshold2}$$

It is to be appreciated that Threshold1 and Threshold2 may be chosen manually via simulations or analysis, to achieve the expected probability of bit error better than a target (for example, target=25%). This engagement logic improves reliability under varying signal quality conditions. If the conditions fails, the pilot output $P_{p,i}$ is passed to the tracking loops.

The output $P_i$ is also routed into a carrier phase discriminator 316, which generates a phase error signal that is filtered through a phase loop filter 318. The system also includes a frequency discriminator 320 and associated frequency loop filter 322, enabling robust frequency tracking. The filtered outputs drive a carrier numerically controlled oscillator (NCO) 324, which produces an updated carrier phase estimate used to wipe off the incoming signal. Simultaneously, the code tracking path includes a code phase discriminator 328 and a code phase loop filter 330, whose output updates a code NCO 332 to maintain alignment with the spreading code. Together, the carrier and code tracking loops may ensure accurate synchronization and allow the GNSS receiver to maintain lock on the signal while decoding the transmitted navigation data.

It is to be appreciated that the demodulation and coherent combining are performed for multiple integration periods, and the coherent combining gain is dynamically adjusted based on a real-time estimate of bit error rate as determined from the measured average $C/N_0$ and real-time signal power as described above. It is to be appreciated that "multiple integration periods" refer to multiple coherent integration periods. For example, the method of the present disclosure may apply to a coherent integration period = 20ms, or 40ms, or 60ms, etc. To give an example, GPS L5 has a data symbol period of 10ms, thus for a coherent integration period = 20ms, the method demodulates 2 data symbols (for 20ms) and coherently combines them (after data wipe-off) with 20ms worth of pilot symbols. If greater sensitivity is to be achieved, the coherent integration period may be selected to equal 40ms, then 4 data symbols (for 40ms) are demodulated and coherently combined with 40ms worth of pilot symbols, and so on.

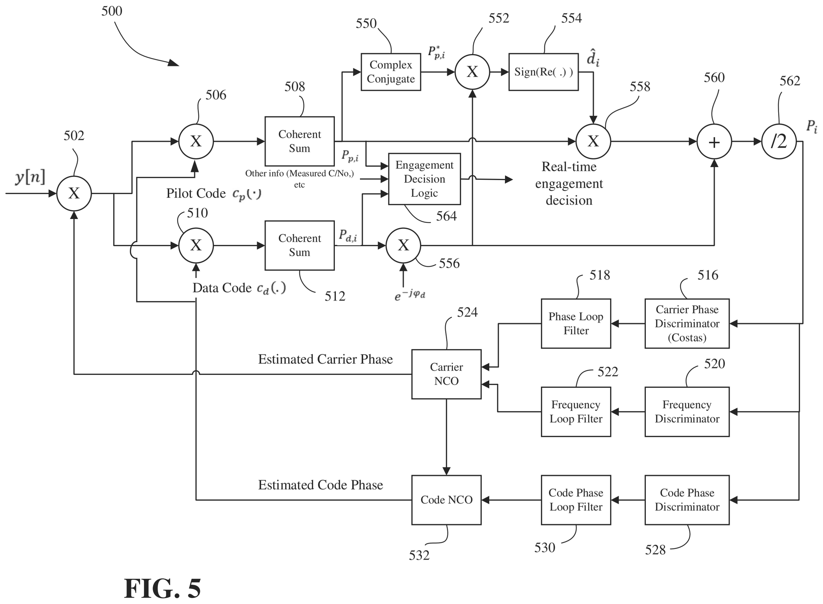

FIG. 5 is an architecture of a GNSS receiver, according to another embodiment of the present disclosure.

Referring to FIG. 5, there is shown a signal processing architecture 500 configured to process an incoming sampled signal $y[n]$ for combined pilot and data channel tracking.

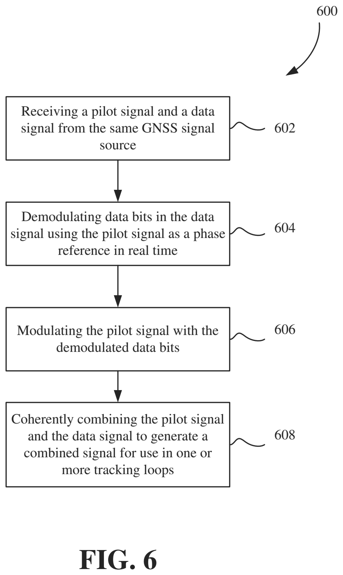

FIG. 6 is a flowchart illustrating the method 600 for coherently combining a pilot signal and a data signal of architecture 500 for improved tracking.

In step 602, an incoming signal *y[n]* including a pilot signal and data signal from the same GNSS source is received. The incoming signal *y[n]* is mixed in a first multiplier 502 with an estimated carrier phase signal generated by a carrier numerically controlled oscillator (NCO) 524, the output of which is provided to both a pilot channel branch and a data channel branch.

In step 604, the data bits in the data signal are demodulated using the pilot signal as a phase reference in real time, as will be described below.

In the pilot channel branch, the mixed signal is multiplied in a second multiplier 506 by a locally generated pilot code $c_p(\cdot)$, and the resulting signal is coherently summed in a coherent sum module 508 to produce a pilot correlation value $P_{p,i}$. The pilot correlation value $P_{p,i}$ is supplied to an engagement decision logic module 564 and to a complex conjugate module 550 to produce $P^*_{p,i}$, the output of which is multiplied in a multiplier 552 by a phase-rotated data correlation signal from the data channel branch.

In the data channel branch, the mixed signal from multiplier 502 is multiplied in a third multiplier 510 by a locally generated data code $c_d(\cdot)$, and the resulting signal is coherently summed in a coherent sum module 512 to produce a data correlation value $P_{d,i}$. The data correlation value $P_{d,i}$ is multiplied in a multiplier 556 by a phase rotation term $e^{-j\phi d}$ and provided both to multiplier 552 and to the engagement decision logic module 564. The output of multiplier 552 is processed by a sign detection module 554 to generate a detected data bit $\hat{d}_i$.

In step 606, the detected data bit $\hat{d}_i$ is then multiplied in multiplier 558 with the pilot correlation value $P_{p,i}$ to produce a despread pilot signal, i.e., the pilot signal is modulated with the demodulated data bits.

In step 608, the despread pilot signal is combined in an adder 560 with the data correlation value $P_{d,i}$ and the sum is divided by two in a divider 562 to generate a pilot output $P_i$ for tracking i.e., the pilot signal and data signal are coherently combined to generate the combined signal $P_i$ for use in one of more tracking loops.

The pilot output $P_i$ is further processed in a carrier phase discriminator 516, such as a Costas loop discriminator, to generate a carrier phase error signal, which is filtered by a phase loop filter 518 and applied to the carrier NCO 524. A frequency discriminator 520 generates a frequency error signal that is filtered by a frequency loop filter 522 and also applied to the carrier NCO 524. Additionally, a code phase discriminator 528 receives the mixed signal from multiplier 502 and generates a code phase error signal, which is filtered by a code phase loop filter 530 and applied to a code NCO 532 to produce an estimated code phase supplied to the second and third multipliers 506 and 510. In this manner, the architecture 500 may facilitate concurrent pilot and data channel processing, real-time engagement decision-making, and accurate estimation of carrier and code phases for robust signal tracking.

It is to be appreciated that the engagement decision logic module 564 monitors signal conditions, such as measured carrier-to-noise density ratio $C/N_0$, and may determine in real time whether to select the pilot, data, or combined signal path as the input. Module 564 uses measured average $C/N_0$ and real-time signal power (based on pilot and data coherent sums) to generate a real-time engagement decision to control whether the real-time modulation of the pilot signal and pilot/data combining should run or not based on the following conditions:

(1)

$$\text{average } C/N_0 > \text{Threshold1};$$

and
(2)

$$|P_{p,i}|^2 + |P_{d,i}|^2 > \text{Threshold2}$$

It is to be appreciated that Threshold1 and Threshold2 may be chosen manually via simulations or analysis, to achieve the expected probability of bit error better than a target (for example, target=25%). This engagement logic improves reliability under varying signal quality conditions.

The algorithm of the present disclosure will now be described in more detail. An L5 signal (such as a GAL E5a signal) with data bit period = 20ms is used herein to illustrate the algorithm, without loss of generality. The algorithm may also be applied to other L5 signals (GPS L5, BDS B2a, GAL E5b) and L1 signals (GPS L1C, GAL E1, BDS B1C) that include pilot and data components, with minor changes due to different data bit periods.

A GNSS signal *y[n]* consisting of data and pilot components may be modeled at the receiver baseband as shown in Equation (1).

$$y[n] = y(nT_s)$$
$$= \sqrt{\alpha C}e^{j\varphi_d} \cdot d(nT_s - \tau_0) \cdot c_d(nT_s - \tau_0) \cdot e^{j2\pi f_d nT_s + j\varphi_0} + \sqrt{C} \cdot c_p(nT_s - \tau_0)$$
$$\cdot e^{j2\pi f_d nT_s + j\varphi_0}$$
$$+ n(nT_s) \qquad (1)$$

Equation (1) is the sum of three terms: the data and the pilot components, and an additive white gaussian noise (AWGN) component. $C$ is the received power of the pilot signal, whereas $\alpha$ is the ratio between the data and pilot power levels, which is from signal specification in ICD. For example, $\alpha = 1$ for all the L5 signals and GAL E1 signals, and $\alpha = 0.25$ for BDS B1C signal. $d(.)$ is the navigation data (or symbol) bit whereas $c_d(.)$ and $c_p(\cdot)$ denote the PRN codes, including the effect of secondary codes, of the data and pilot components, respectively. $n$ is the time index and $T_s$ is the sampling interval. $\tau_0$, $f_d$ and $\varphi_0$ are the delay, Doppler frequency, and carrier phase. The data and pilot components may be transmitted in different phases, which is modeled through a constant $\varphi_d$ specified in ICD. The noise $n(nT_s)$ is zero mean with independent and identically distributed (i.i.d.) real and imaginary parts, both with variance $\sigma_n^2$.

$y[n]$ is then correlated with local replicas of the carrier and the data and pilot codes. The output of the data and pilot correlator during tracking are (the effect of residual frequency error is neglected).

$$P_{p,i} = AR_p(\Delta\tau)e^{j\Delta\varphi} + n_{p,i} \qquad (2)$$

$$P_{d,i} = kAd_i R_d(\Delta\tau)e^{j\Delta\varphi} + n_{d,i} \qquad (3)$$

In Equations (2) and (3), i is the time index for the PDI. $\Delta\tau = \tau - \tau_0$ is the residual delay error and $\tau$ is the delay hypothesis in the receiver. $\Delta\varphi = \varphi - \varphi_0$ is the residual carrier phase error and $\varphi$ is the carrier phase hypothesis in the receiver. $d_i = d[iNT_s]$ is the data symbol and assumed constant over the coherent integration time (PDI). $A = \sqrt{C}$ is the signal amplitude and $k = \sqrt{\alpha}e^{j\varphi_d}$ is a known constant including possible amplitude and phase difference between the data and pilot components.

$R_d(\cdot)$ and $R_p(\cdot)$ are the data and pilot auto-correlation functions, respectively. $R_d(\cdot)$ and $R_p(\cdot)$ are the same for practical purposes.

$$R(\cdot) = R_d(\cdot) = R_p(\cdot) \qquad (4)$$

The different noise components $n_{p,i}$ and $n_{d,i}$ are zero-mean i.i.d. Gaussian random variables. The real and imaginary parts of $n_{p,i}$ and $n_{d,i}$ have variance $\sigma^2 = \frac{\sigma_n^2}{N}$, where $N$ is the number of samples used in the correlation process.

For each PDI period, the phase of $P_{d,i}$ may be removed by using $P_{p,i}$ as reference ($P_{p,i}^*$ is the complex conjugate of $P_{p,i}$), before inputting into the tracking loops:

$$P_{d,i} \cdot e^{-j\varphi_d} \cdot P_{p,i}^* = \left(kAd_i R(\Delta\tau)e^{j\Delta\varphi} + n_{d,i}\right) \cdot e^{-j\varphi_d} \cdot \left(AR(\Delta\tau)e^{-j\Delta\varphi} + n_{p,i}\right)$$
$$= \left(\sqrt{\alpha}Ad_i R(\Delta\tau)e^{j\Delta\varphi} + \tilde{n}_{d,i}\right) \cdot \left(AR(\Delta\tau)e^{-j\Delta\varphi} + n_{p,i}\right)$$
$$= \sqrt{\alpha}A^2 d_i R^2(\Delta\tau) + \sqrt{\alpha}Ad_i R(\Delta\tau)e^{j\Delta\varphi}n_{p,i} + AR(\Delta\tau)e^{-j\Delta\varphi}\tilde{n}_{d,i}$$
$$+ \tilde{n}_{d,i}n_{p,i} \qquad (5)$$

The data bit $d_i$ may then be demodulated as shown in Equation (6).

$$\hat{d}_i = sign\left(Real\left(P_{d,i} \cdot e^{-j\varphi_d} \cdot P_{p,i}^*\right)\right) \qquad (6)$$

This is a differential data demodulation approach. The differential demodulation BER may be estimated by Equation (7):

$$BER(C/N_0) = 0.5 \cdot e^{-\left(\frac{C}{N_0}\right)T} \qquad (7)$$

In Equation (7), *T* is the data bit period, here *T* = 0.02 s.

For each PDI, this demodulation operation occurs before the signal is input into tracking loops. The demodulated data bit $\hat{d}_i$ may be used to wipe off or cancel the data bit in the data signal $P_{d,i}$, allowing for coherent combination of pilot signal $P_{p,i}$ and data signal $P_{d,i}$. This allows the combined signal input into tracking loops in real-time.

A general formula for output of pilot and data coherent combining is shown in Equation (8).

$$P_i = w_p \cdot \hat{d}_i \cdot P_{p,i} + w_d \cdot P_{d,i} \cdot e^{-j\varphi_d}$$
$$= \left(w_p \cdot \hat{d}_i \cdot AR(\Delta\tau)e^{j\Delta\varphi} + w_d \cdot \sqrt{\alpha} \cdot Ad_i R(\Delta\tau)e^{j\Delta\varphi}\right) + w_p \cdot \hat{d}_i \cdot n_{p,i} + w_d \cdot n_{d,i}e^{j\Delta\varphi} \quad (8)$$

In Equation (8), $w_p$ and $w_d$ are weights for pilot component and data component during coherent combining, respectively. For all the L5 signals in the current study, $\alpha = 1$, thus $w_p = w_d = 1$.

$$P_i = \frac{\hat{d}_i \cdot P_{p,i} + P_{d,i} \cdot e^{-j\varphi_d}}{2}$$
$$= \frac{\left(\hat{d}_i \cdot AR(\Delta\tau)e^{j\Delta\varphi} + Ad_i R(\Delta\tau)e^{j\Delta\varphi}\right) + \hat{d}_i \cdot n_{p,i} + n_{d,i}e^{j\Delta\varphi}}{2} \quad (9)$$
$$= \frac{AR(\Delta\tau)e^{j\Delta\varphi} \cdot \left(\hat{d}_i + d_i\right) + \hat{d}_i \cdot n_{p,i} + n_{d,i}e^{j\Delta\varphi}}{2}$$

As shown in Equation (9), for each bit, when data demodulation is correct ($\hat{d}_i = d_i$), $P_i$ has 3dB SNR gain over $P_{p,i}$ or $P_{d,i}$. But when the data demodulation is incorrect ($\hat{d}_i \neq d_i$), $P_i$ will only contain noise.

The Real-Time Demod is only used for the on-time tap to demodulate the data bit, but the pilot+data combining should run for on-time, early, and late taps (or all the taps that currently go into the tracking loops). According to the present disclosure, coherent combining gain to the tracking loops is substantial even when BER is high, and quickly converges to the theoretical limit of 3dB when BER is reduced.

Based on the above, some benefits of the algorithm are shown in Table 1.

**Table 1** - **Summary of benefits of the proposed algorithm vs. baseline**

| C/N$_0$ Range | Measurement Quality Gain for Frequency Tracking Loop (frequency error 1-sigma) | Measurement Quality Gain for Code Tracking Loop (code error 1-sigma) | Sensitivity Gain for Tracking Loops (probability of large tracking errors) |
|---|---|---|---|
| **>=25dBHz** | 3dB | 3dB | N/A |
| **[21, 25)dBHz** | 2.5 to 3dB | 3dB | N/A |
| **[15,21)dBHz** | 1.5 to 2.5dB | 1.5 to 3dB | 1.6dB |
| **[12, 15)dBHz** | N/A | N/A | 1.2 to 1.6dB |

Additional benefits of the algorithm may include: (1) easy to implement; (2) does not change any of tracking loops design; and (3) may be implemented in SW.

When a data bit is demodulated inside tracking loops (such as Costas loop), it is most likely not practical to feedback the demodulated data bit to wipe off or be cancelled. This is because the data signal (with Nav bit) has already been input and used to drive the loops. It is possible to do the wipe off and re-run the loop with coherent combined signal. However, this will be complicated and may not be real-time operation.

Compared with Costas-based data demodulation, the algorithm in this disclosure has other advantages: (1) robust against frequency or phase drift and jitters because they are cancelled in data signal when using pilot signal as reference; and (2) may operate at much lower C/N$_0$ levels than Costas loop, thus it may be used in the frequency tracking loop and delay lock loops at low C/N$_0$ (the C/N$_0$ region that is important for smartphone L5 applications).

The present disclosure above focuses on tracking, but the disclosure may also be applied to acquisition performance improvement, e.g., if the demodulated bit is used to wipe off or cancel the data symbol and then coherently combine with the pilot symbol.

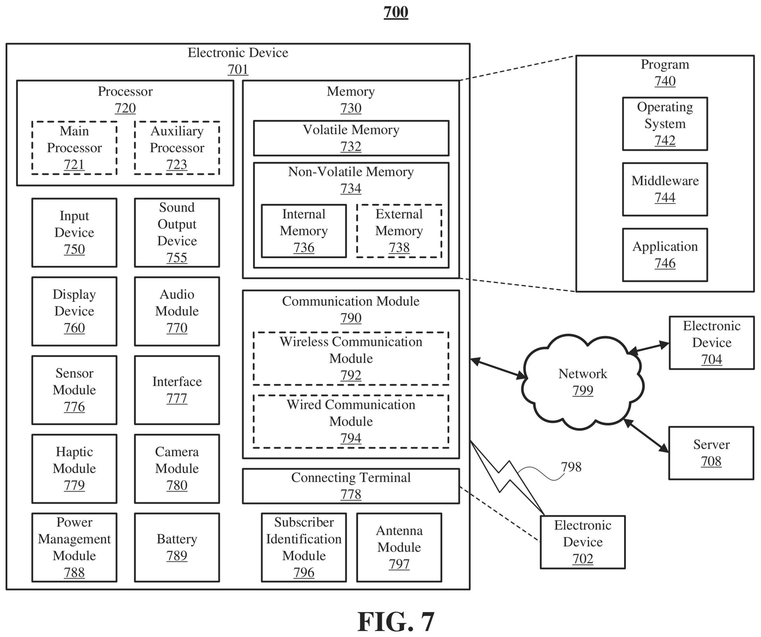

FIG. 7 is a block diagram of an electronic device in a network environment 700, according to an embodiment.

Referring to FIG. 7, an electronic device 701 in a network environment 700 may communicate with an electronic device 702 via a first network 798 (e.g., a short-range wireless communication network), or an electronic device 704 or a server 708 via a second network 799 (e.g., a long-range wireless communication network). The electronic device 701 may communicate with the electronic device 704 via the server 708. The electronic device 701 may include a processor 720, a memory 730, an input device 750, a sound output device 755, a display device 760, an audio module 770, a sensor module 776, an interface 777, a haptic module 779, a camera module 780, a power management module 788, a battery 789, a communication module 790, a subscriber identification module (SIM) card 796, or an antenna module 797. In some embodiments, at least one (e.g., the display device 760 or the camera module 780) of the components may be omitted from the electronic device 701, or one or more other components may be added to the electronic device 701. Some of the components may be implemented as a single integrated circuit (IC). For example, the sensor module 776 (e.g., a fingerprint sensor, an iris sensor, or an illuminance sensor) may be embedded in the display device 760 (e.g., a display).

The processor 720 may execute software (e.g., a program 740) to control at least one other component (e.g., a hardware or a software component) of the electronic device 701 coupled with the processor 720 and may perform various data processing or computations. For example, in some embodiments, the processor 720 performs the data processing shown in FIG. 4 for the receiver architecture shown in FIG. 3. For example, in another embodiment, the processor 720 performs the data processing shown in FIG. 6 for the receiver architecture shown in FIG. 5.

As at least part of the data processing or computations, the processor 720 may load a command or data received from another component (e.g., the sensor module 776 or the communication module 790) in volatile memory 732, process the command or the data stored in the volatile memory 732, and store resulting data in non-volatile memory 734. The processor 720 may include a main processor 721 (e.g., a central processing unit (CPU) or an application processor (AP)), and an auxiliary processor 723 (e.g., a graphics processing unit (GPU), an image signal processor (ISP), a sensor hub processor, or a communication processor (CP)) that is operable independently from, or in conjunction with, the main processor 721. Additionally or alternatively, the auxiliary processor 723 may be adapted to consume less power than the main processor 721, or execute a particular function. The auxiliary processor 723 may be implemented as being separate from, or a part of, the main processor 721.

The auxiliary processor 723 may control at least some of the functions or states related to at least one component (e.g., the display device 760, the sensor module 776, or the communication module 790) among the components of the electronic device 701, instead of the main processor 721 while the main processor 721 is in an inactive (e.g., sleep) state, or together with the main processor 721 while the main processor 721 is in an active state (e.g., executing an application). The auxiliary processor 723 (e.g., an image signal processor or a communication processor) may be implemented as part of another component (e.g., the camera module 780 or the communication module 790) functionally related to the auxiliary processor 723.

The memory 730 may store various data used by at least one component (e.g., the processor 720 or the sensor module 776) of the electronic device 701. The various data may include, for example, software (e.g., the program 740) and input data or output data for a command related thereto. The memory 730 may include the volatile memory 732 or the non-volatile memory 734. Non-volatile memory 734 may include internal memory 736 and/or external memory 738.

The program 740 may be stored in the memory 730 as software, and may include, for example, an operating system (OS) 742, middleware 744, or an application 746.

The input device 750 may receive a command or data to be used by another component (e.g., the processor 720) of the electronic device 701, from the outside (e.g., a user) of the electronic device 701. The input device 750 may include, for example, a microphone, a mouse, or a keyboard.

The sound output device 755 may output sound signals to the outside of the electronic device 701. The sound output device 755 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 760 may visually provide information to the outside (e.g., a user) of the electronic device 701. The display device 760 may include, for example, a display, a hologram device, or a projector and control circuitry to control a corresponding one of the display, hologram device, and projector. The display device 760 may include touch circuitry adapted to detect a touch, or sensor circuitry (e.g., a pressure sensor) adapted to measure the intensity of force incurred by the touch.

The audio module 770 may convert a sound into an electrical signal and vice versa. The audio module 770 may obtain the sound via the input device 750 or output the sound via the sound output device 755 or a headphone of an external electronic device 702 directly (e.g., wired) or wirelessly coupled with the electronic device 701.

The sensor module 776 may detect an operational state (e.g., power or temperature) of the electronic device 701 or an environmental state (e.g., a state of a user) external to the electronic device 701, and then generate an electrical signal or data value corresponding to the detected state. The sensor module 776 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 777 may support one or more specified protocols to be used for the electronic device 701 to be coupled with the external electronic device 702 directly (e.g., wired) or wirelessly. The interface 777 may include, for example, a high- definition multimedia interface (HDMI), a universal serial bus (USB) interface, a secure digital (SD) card interface, or an audio interface.

A connecting terminal 778 may include a connector via which the electronic device 701 may be physically connected with the external electronic device 702. The connecting terminal 778 may include, for example, an HDMI connector, a USB connector, an SD card connector, or an audio connector (e.g., a headphone connector).

The haptic module 779 may convert an electrical signal into a mechanical stimulus (e.g., a vibration or a movement) or an electrical stimulus which may be recognized by a user via tactile sensation or kinesthetic sensation. The haptic module 779 may include, for example, a motor, a piezoelectric element, or an electrical stimulator.

The camera module 780 may capture a still image or moving images. The camera module 780 may include one or more lenses, image sensors, image signal processors, or flashes. The power management module 788 may manage power supplied to the electronic device 701. The power management module 788 may be implemented as at least part of, for example, a power management integrated circuit (PMIC).

The battery 789 may supply power to at least one component of the electronic device 701. The battery 789 may include, for example, a primary cell which is not rechargeable, a secondary cell which is rechargeable, or a fuel cell.

The communication module 790 may support establishing a direct (e.g., wired) communication channel or a wireless communication channel between the electronic device 701 and the external electronic device (e.g., the electronic device 702, the electronic device 704, or the server 708) and performing communication via the established communication channel. The communication module 790 may include one or more communication processors that are operable independently from the processor 720 (e.g., the AP) and supports a direct (e.g., wired) communication or a wireless communication. The communication module 790 may include a wireless communication module 792 (e.g., a cellular communication module, a short-range wireless communication module, or a global navigation satellite system (GNSS) communication module) or a wired communication module 794 (e.g., a local area network (LAN) communication module or a power line communication (PLC) module). A corresponding one of these communication modules may communicate with the external electronic device via the first network 798 (e.g., a short-range communication network, such as BLUETOOTH™, wireless-fidelity (Wi-Fi) direct, or a standard of the Infrared Data Association (IrDA)) or the second network 799 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 792 may identify and authenticate the electronic device 701 in a communication network, such as the first network 798 or the second network 799, using subscriber information (e.g., international mobile subscriber identity (IMSI)) stored in the subscriber identification module 796.

In some embodiments, the receiver architectures shown in FIGS. 3 and 5 may be disposed in communication module 790 . In certain embodiments, the communication module 790 may include at least one processor to control the receiver architectures of FIGS. 3 and 5 and implement the methods shown and described in relation to FIGS. 4 and 6. In other embodiments, processor 720 controls the architectures of FIGS. 3 and 5. In a further embodiment, the receiver architectures shown in FIGS. 3 and 5 may be disposed in processor 720. The antenna module 797 may transmit or receive a signal or power to or from the outside (e.g., the external electronic device) of the electronic device 701. The antenna module 797 may include one or more antennas, and, therefrom, at least one antenna appropriate for a communication scheme used in the communication network, such as the first network 798 or the second network 799, may be selected, for example, by the communication module 790 (e.g., the wireless communication module 792). The signal or the power may then be transmitted or received between the communication module 790 and the external electronic device via the selected at least one antenna.

Commands or data may be transmitted or received between the electronic device 701 and the external electronic device 704 via the server 708 coupled with the second network 799. Each of the electronic devices 702 and 704 may be a device of a same type as, or a different type, from the electronic device 701. All or some of operations to be executed at the electronic device 701 may be executed at one or more of the external electronic devices 702, 704, or 708. For example, if the electronic device 701 should perform a function or a service automatically, or in response to a request from a user or another device, the electronic device 701, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 701. The electronic device 701 may provide the outcome, with or without further processing of the outcome, as at least part of a reply to the request. To that end, a cloud computing, distributed computing, or client-server computing technology may be used, for example.

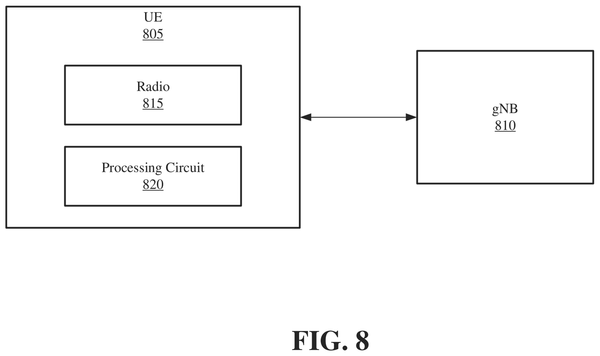

FIG. 8 shows a system including a UE 805 and a gNB 810, in communication with each other. The UE may include a radio 815 and a processing circuit (or a means for processing) 820, which may perform various methods disclosed herein, e.g., the method illustrated in FIG. 1. For example, the processing circuit 820 may receive, via the radio 815, transmissions from the network node (gNB) 810, and the processing circuit 820 may transmit, via the radio 815, signals to the gNB 810.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

## Claims

1. A method for coherently combining pilot and data signals in a global navigation satellite system, GNSS, receiver, the method comprising:

   receiving (402) a pilot signal and a data signal from a same GNSS signal source;
   demodulating data bits (404) in the data signal using the pilot signal as a phase reference;
   cancelling (406) the demodulated data bits from the data signal; and
   coherently combining (608) the pilot signal and the data signal to generate a combined signal.

2. The method of claim 1, further comprising removing a constant phase offset between the pilot signal and the data signal using a phase rotator after an integration-and-dump operation.

3. The method of claim 1 or 2, further comprising performing a secondary code cancelling on both the pilot signal and the data signal after the integration-and-dump operation.

4. The method of any one of claims 1 to 3, further comprising generating an engagement decision to enable or disable data demodulation and pilot/data combining, wherein the engagement decision is based on:

   an average carrier-to-noise density ratio, $C/N_0$, exceeding a first threshold; and
   a sum of pilot and data signal powers exceeding a second threshold.

5. The method of any one of claims 1 to 4, wherein demodulating the data bits comprises using differential demodulation between the pilot signal and the data signal.

6. The method of any one of claims 1 to 5, wherein the combined signal is used as an input to a frequency tracking loop, a phase tracking loop, and a code tracking loop of the GNSS receiver.

7. The method of any one of claims 1 to 6, wherein the demodulation and coherent combining are performed for at least one integration period, and wherein the coherent combining gain is dynamically adjusted based on a real-time estimate of bit error rate.

8. The method of any one of claims 1 to 7, wherein the coherent combining is applied during acquisition to improve sensitivity of the GNSS receiver by at least 1.5 dB relative to a pilot-only baseline.

9. The method of any one of claims 1 to 8, wherein demodulating data bits in the data signal using the pilot signal as a phase reference is performed in real-time.

10. A global navigation satellite system, GNSS, receiver comprising:

   at least one processing unit (720, 820); and
   a memory (730) storing instructions that, when executed by the processing unit (720, 820), cause the GNSS receiver to:

   receive (402) a pilot signal and a data signal from a same GNSS signal source,
   demodulate (404) data bits in the data signal using the pilot signal as a phase reference,
   cancelling (406) the demodulated data bits from the data signal, and
   coherently combine (408) the pilot signal and the data signal to generate a combined signal.

11. The GNSS receiver of claim 10, wherein the processing unit (720, 820) is further configured to remove a constant phase offset between the pilot signal and the data signal using a phase rotator after an integration-and-dump operation.

12. The GNSS receiver of claim 10 or 11, wherein the processing unit (720, 820) is further configured to perform a secondary code cancelling on both the pilot signal and the data signal after the integration-and-dump operation.

13. The GNSS receiver of any one of claims 10 to 12, wherein the processing unit (720, 820) is further configured to generate an engagement decision to enable or disable data demodulation and pilot/data combining, wherein the engagement decision is based on:

   an average carrier-to-noise density ratio, $C/N_0$, exceeding a first threshold; and
   a sum of pilot and data signal powers exceeding a second threshold.

14. The GNSS receiver of any one of claims 10 to 13, wherein the processing unit (720, 820) is configured to demodulate the data bits using differential demodulation between the pilot signal and the data signal.

15. The GNSS receiver of any one of claims 10 to 14, wherein the combined signal is provided as an input to a frequency tracking loop, a phase tracking loop, and a code tracking loop of the GNSS receiver.

FIG. 1

200

Server — 203

Data Bits from External Aiding — 201

$y[n]$

X

X

Pilot Code $c_p(\cdot)$

Coherent Sum  $P_{p,i}$

X

Data Code $c_d(.)$

Coherent Sum  $P_{d,i}$

If i-th bit is 1

If i-th bit is -1

Pilot+Data combining — 205

214

Phase Loop Filter

Carrier Phase Discriminator (Costas)

Estimated Carrier Phase

Carrier NCO

Frequency Loop Filter

Frequency Discriminator

226

Estimated Code Phase

Code NCO

Code Phase Loop Filter

Code Phase Discriminator

**FIG. 2**

14

FIG. 3

400

Receiving a pilot signal and a data signal from the same GNSS signal source — 402

Demodulating data bits in the data signal using the pilot signal as a phase reference in real time — 404

Cancelling the demodulated data bits from the data signal — 406

Coherently combining the pilot signal and the data signal to generate a combined signal for use in one or more tracking loops — 408

# FIG. 4

FIG. 5

600

Receiving a pilot signal and a data
signal from the same GNSS signal
source — 602

Demodulating data bits in the data
signal using the pilot signal as a phase
reference in real time — 604

Modulating the pilot signal with the
demodulated data bits — 606

Coherently combining the pilot signal
and the data signal to generate a
combined signal for use in one or
more tracking loops — 608

**FIG. 6**

**700**

**FIG. 7**

UE
805

Radio
815

Processing Circuit
820

gNB
810

**FIG. 8**

## EP 4 756 497 A1

**European Patent Office / Europäisches Patentamt / Office européen des brevets**

## EUROPEAN SEARCH REPORT

**Application Number**

EP 25 21 4602

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/234987 A1 (WEI JIAOLONG [CN] ET AL) 17 August 2017 (2017-08-17)<br>* paragraph [0007] - paragraph [0031] *<br>* paragraph [0039] - paragraph [0055] *<br>* abstract; claims 1-15 *<br>----- | 1-15 | INV.<br>G01S19/24<br>G01S19/37 |
| X | D. BORIO ET AL: "Coherent, Noncoherent, and Differentially Coherent Combining Techniques for Acquisition of New Composite GNSS Signals",<br>IEEE TRANSACTIONS ON AEROSPACE AND ELECTRONIC SYSTEMS. IEEE SERVICE CENTER, PISCATAWAY, NJ., US,<br>vol. 45, no. 3, 1 July 2009 (2009-07-01), pages 1227-1240, XP011277365,<br>ISSN: 0018-9251, DOI:<br>10.1109/TAES.2009.5259196<br>* the whole document *<br>----- | 1-15 | |
| A | US 2008/031281 A1 (RIES LIONEL [FR]) 7 February 2008 (2008-02-07)<br>* paragraph [0009] - paragraph [0050] *<br>* claims 1-16 *<br>* abstract *<br>----- | 1-15 | **TECHNICAL FIELDS SEARCHED (IPC)**<br><br>G01S |
| A | VAN DIGGELEN, FRANK ET AL: "Nav Data bits for Increasing Sensitivity and Robustness",<br>GNSS 2024 - PROCEEDINGS OF THE 37TH INTERNATIONAL TECHNICAL MEETING OF THE SATELLITE DIVISION OF THE INSTITUTE OF NAVIGATION (ION GNSS+ 2024) THE INSTITUTE OF NAVIGATION, 8551 RIXLEW LANE SUITE 360 MANASSAS, VA 20109, USA,<br>20 September 2024 (2024-09-20), pages 38-57, XP056020065,<br>* the whole document *<br>----- | 1-15 | |

The present search report has been drawn up for all claims

| Place of search | Date of completion of the search | Examiner |
|---|---|---|
| Munich | 17 March 2026 | Galmiche, Aurélien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P4C01)

# EP 4 756 497 A1

## ANNEX TO THE EUROPEAN SEARCH REPORT
## ON EUROPEAN PATENT APPLICATION NO.

EP 25 21 4602

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2026

| Patent document cited in search report | Publication date | Patent family member(s) | | Publication date |
|---|---|---|---|---|
| US 2017234987 A1 | 17-08-2017 | CN | 104614740 A | 13-05-2015 |
| | | EP | 3258293 A1 | 20-12-2017 |
| | | JP | 6389331 B2 | 12-09-2018 |
| | | JP | 2017531193 A | 19-10-2017 |
| | | US | 2017234987 A1 | 17-08-2017 |
| | | WO | 2016127479 A1 | 18-08-2016 |
| US 2008031281 A1 | 07-02-2008 | CA | 2529197 A1 | 20-01-2005 |
| | | CN | 1806183 A | 19-07-2006 |
| | | EP | 1634097 A1 | 15-03-2006 |
| | | FR | 2856143 A1 | 17-12-2004 |
| | | US | 2008031281 A1 | 07-02-2008 |
| | | WO | 2005006012 A1 | 20-01-2005 |

EPO FORM P0459

For more details about this annex : see Official Journal of the European Patent Office, No. 12/82